# EUROPEAN PATENT APPLICATION

(11) **EP 4 715 516 A1**
(43) Date of publication of application: **25.03.2026**
(21) Application number: 24819466.4
(22) Date of filing: 12.04.2024
(51) Int. Cl.: G06F 1/16, G02F 1/167, H03F 3/181, H04R 1/02, G02F 1/137, H10K 59/80

(54) **ELECTRONIC DEVICE**

(30) Priority: 09.06.2023 KR 20230074432; 22.12.2023 KR 20230189686
(71) Applicant: LG Electronics Inc., Yeongdeungpo-gu Seoul 07336 (KR)
(72) Inventor: KWAK, Myounghoon, Seoul 06772 (KR); YOO, Jaesuk, Seoul 06772 (KR); RYU, Junghan, Seoul 06772 (KR); KIM, Youngkyoung, Seoul 06772 (KR); SOHN, Youngwook, Seoul 06772 (KR); OH, Minkyu, Seoul 06772 (KR); HWANG, Sunggul, Seoul 06772 (KR)
(74) Representative: Schornack, Oliver
(86) International application number: PCT/KR2024/004904
(87) International publication number: WO 2024/253314

(57) **Abstract**

Disclosed is an electronic device. The electronic device disclosed herein may include: a housing having an opening in a forward direction; a display panel which is light transmissive, and that covers the opening; a sheet coupled to the rear surface of the display panel; an amplifier mounted in the inner space of the housing; and a speaker that is coupled to the housing and provides sound to the outside of the housing, wherein the degree of transparency of the sheet may be variable.

## Description

### TECHNICAL FIELD

The present disclosure relates to an electronic device.

### BACKGROUND ART

As the information society develops, the demand for display devices is also increasing in various forms. In response to this, various display devices such as Liquid Crystal Display Device (LCD), Plasma Display Panel (PDP), Electroluminescent Display (ELD), Vacuum Fluorescent Display (VFD), and Organic Light Emitting Diode (OLED) have been researched and used in recent years.

Among these, a LCD panel includes a TFT substrate and a color filter substrate that are opposite to each other with a liquid crystal layer interposed there between, and may display an image by using light provided from a backlight unit. In addition, an OLED panel can display an image by depositing an organic material layer that can emit light by itself on a substrate on which a transparent electrode is formed.

Recently, much research has been conducted on transparent display panels that can not only display images to a user, but also allow a user to see behind the display panel.

### DETAILED DESCRIPTION OF INVENTION

### TECHNICAL PROBLEMS

An object of the present disclosure is to solve the above and other problems.

Another object may be to provide an electronic device having a transparent display panel and an audio amplifier.

Another object may be to provide a structure that can hide or expose an audio amplifier positioned behind a transparent display panel by adjusting the transparency of a sheet attached to the rear surface of a transparent display panel.

Another object may be to provide a structure that can hide or expose an audio amplifier by adjusting the transparency of a cover positioned behind the audio amplifier.

Another object may be to provide a speaker connected to an audio amplifier.

Another object may be to provide a pop-up structure of a speaker.

### TECHNICAL SOLUTION

According to an aspect of the present disclosure for achieving the above or other purposes, an electronic device includes: a housing having an opening in a forward direction; a display panel which is light transmissive, and which covers the opening; a sheet coupled to a rear surface of the display panel; an amplifier mounted in an inner space of the housing; and a speaker which is coupled to the housing, and which provides sound to an outside of the housing, wherein a degree of transparency of the sheet is variable.

### EFFECT OF INVENTION

The effect of the electronic device according to the present disclosure will be described as follows.

According to at least one embodiment of the present disclosure, there may be provided an electronic device including a transparent display panel and an audio amplifier.

According to at least one embodiment of the present disclosure, there may be provided a structure that can hide or expose an audio amplifier positioned behind a transparent display panel by adjusting the transparency of a sheet attached to the rear surface of a transparent display panel.

According to at least one embodiment of the present disclosure, there may be provided a structure that can hide or expose an audio amplifier by adjusting the transparency of a cover positioned behind the audio amplifier.

According to at least one embodiment of the present disclosure, there may be provided a speaker connected to an audio amplifier.

According to at least one embodiment of the present disclosure, there may be provided a pop-up structure of a speaker.

Further scope of applicability of the present disclosure will become apparent from the following detailed description. However, it should be understood that the detailed description and specific embodiments such as preferred embodiments of the present disclosure are given by way of example only, since various changes and modifications within the spirit and scope of the present disclosure may be clearly understood by those skilled in the art.

### BRIEF DESCRIPTION OF THE DRAWING

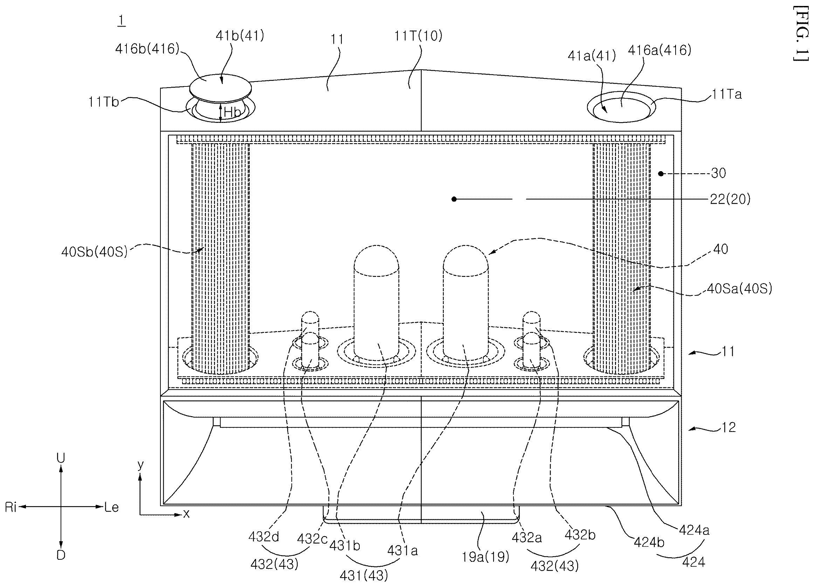

FIGS. 1 to 19 are diagrams illustrating examples of an electronic device according to embodiments of the present disclosure.

### MODE FOR CARRYING OUT THE INVENTION

Description will now be given in detail according to exemplary embodiments disclosed herein, with reference to the accompanying drawings. For the sake of brief description with reference to the drawings, the same or equivalent components may be denoted by the same reference numbers, and description thereof will not be repeated.

In general, suffixes such as "module" and "unit" may be used to refer to elements or components. Use of such suffixes herein is merely intended to facilitate description of the specification, and the suffixes do not have any special meaning or function.

In the present disclosure, that which is well known to one of ordinary skill in the relevant art has generally been omitted for the sake of brevity. The accompanying drawings are used to assist in easy understanding of various technical features and it should be understood that the embodiments presented herein are not limited by the accompanying drawings. As such, the present disclosure should be construed to extend to any alterations, equivalents and substitutes in addition to those which are particularly set out in the accompanying drawings.

It will be understood that although the terms first, second, etc. may be used herein to describe various elements, these elements should not be limited by these terms. These terms are only used to distinguish one element from another.

It will be understood that when an element is referred to as being "connected with" another element, there may be intervening elements present. In contrast, it will be understood that when an element is referred to as being "directly connected with" another element, there are no intervening elements present.

A singular representation may include a plural representation unless context clearly indicates otherwise.

In the present application, it should be understood that the terms "comprises, includes," "has," etc. specify the presence of features, numbers, steps, operations, elements, components, or combinations thereof described in the specification, but do not preclude the presence or addition of one or more other features, numbers, steps, operations, elements, components, or combinations thereof.

The direction indications of up U, down D, left Le, right Ri, front F, and rear R shown in the drawing are only for convenience of explanation, and the technical concept disclosed in this specification are not limited thereby.

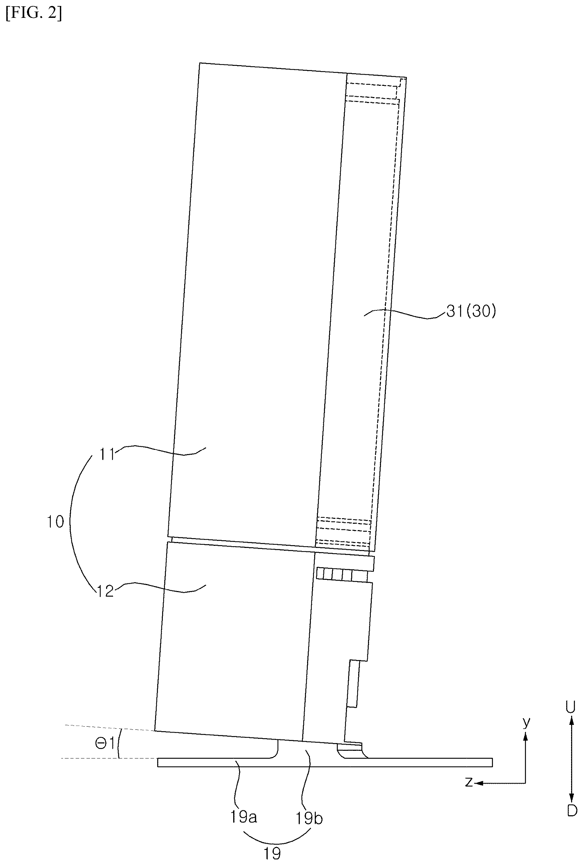

Referring to FIGS. 1 and 2, an electronic device 1 may include a housing 10, a display 20, a cover 30, and an audio unit 40. The electronic device 1 may be referred to as a display device 1, an audio device 1, or a multimedia box 1.

The housing 10 may form an outer shape of the electronic device 1. The housing 10 may have an overall rectangular box shape. The housing 10 may be referred to as a box 10 or a cabinet 10. The housing 10 may be opened at the front and rear.

A stand 19 may include a base 19a and a pole 19b. The base 19a may extend in a horizontal direction while being adjacent to the lower side of the housing 10, and may be placed on a flat portion, such as a floor or a tabletop. The pole 19b may protrude from the base 19a toward the lower side of the housing 10, and be coupled to the lower side. The stand 19 may support the housing 10. For example, the housing 10 may be tilted upward at a given angle (theta 1) with respect to the base 19a of the stand 19. For example, the angle (theta 1) may be approximately 4 degrees.

The display 20 may be mounted on the opened front surface of the housing 10, and may cover the opening. The display 20 may display an image in a forward direction, and may be light transmissive.

The cover 30 may be mounted on the opened rear surface of the housing 10, and may cover the opening. The cover 30 may be light transmissive. Accordingly, a user may view the internal space of the housing 10 through the display 20 and the cover 30.

The audio unit 40 may include a source device, an amplifier, and a speaker. The amplifier may amplify a signal of the source device and provide it to the speaker. For example, the sound output from the speaker may be provided to the front of the electronic device 1 through a speaker horn 424 provided at the lower portion of the display 20. For example, the sound output from the speaker may be provided to the outside of the electronic device 1 through a head 416 provided at the upper side of the housing 10.

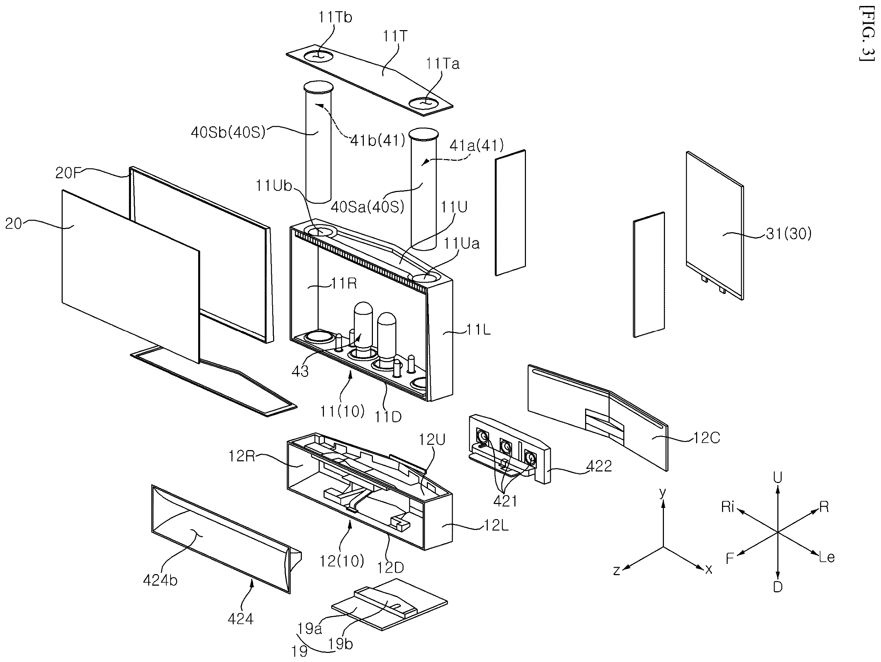

Referring to FIG. 3, the housing 10 may include a first housing 11 and a second housing 12. The first and second housings 11, 12 may be open at the front and rear. The first housing 11 may be positioned above the second housing 12. The height of the first housing 11 may be greater than that of the second housing 12. Each of the first housing 11 and the second housing 12 may have a rectangular frame shape. Alternatively, the first housing 11 and the second housing 12 may be formed as one body. In this case, a partition wall of the housing 10 corresponding to a lower part 11D of the first housing 11 and an upper part 12U of the second housing 12 may divide the internal space of the housing 10 into two spaces.

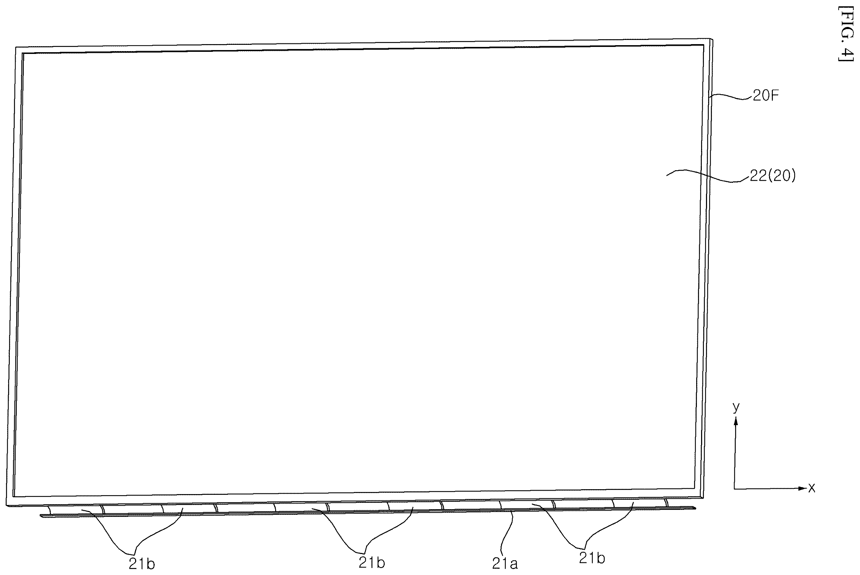

Referring to FIGS. 3 and 4, the display 20 may be positioned on the open front of the first housing 11, and may be a rectangular panel corresponding to the shape of the first housing 11. The frame 20F may extend along the perimeter of the display 20, and cover the lateral side of the display 20. The display 20 may be coupled or attached to the first housing 11 through the frame 20F.

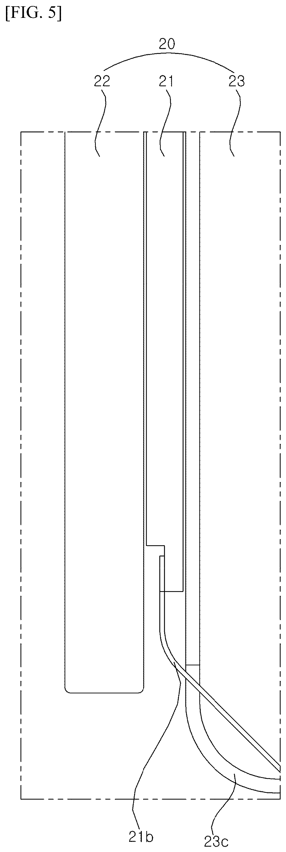

Referring to FIG. 5, the display 20 may include a display panel 21, glass 22, and a sheet 23.

The display panel 21 may include a plurality of pixels, and may output an image by adjusting the color, brightness, and saturation for each pixel. The display panel 21 may be divided into an active area where an image is displayed and a deactive area where an image is not displayed. The display panel 21 may emit light corresponding to the color of red, green, or blue in response to a control signal. The display panel 21 may be an Organic Light Emitting Diode (OLED).

A source PCB 21a may be adjacent to one side (e.g., the lower side) of the display panel 21. The source PCB 21a may be electrically connected to the display panel 21 through a cable 21b, such as a Chip On Film (COF).

The glass 22 may be coupled or attached to the front surface of the display panel 21. The glass 22 may be transparent, and may protect the display panel 21. The glass 22 may be omitted.

The sheet 23 may be coupled or attached to the rear surface of the display panel 21. The sheet 23 may have variable transparency. The sheet 23 may be (semi)transparent or opaque.

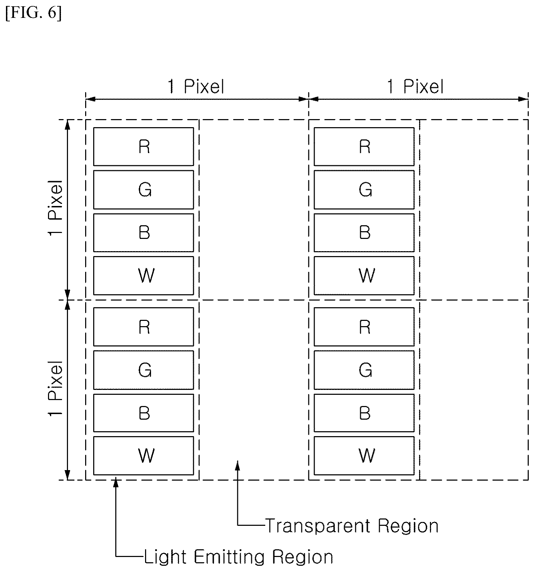

Referring to FIGS. 5 and 6, a pixel of the display panel 21 may include a light emitting region and a transparent region. In the light emitting region, Red, Green, Blue, White (RGBW) subpixels may be arranged in a longitudinal direction, and the transparent region having no subpixel may be arranged next to the light emitting region.

Accordingly, the display panel 21 including a plurality of pixels may not only display images but also transmit light. The display panel 21 may be referred to as a transparent display panel or a transparent OLED panel.

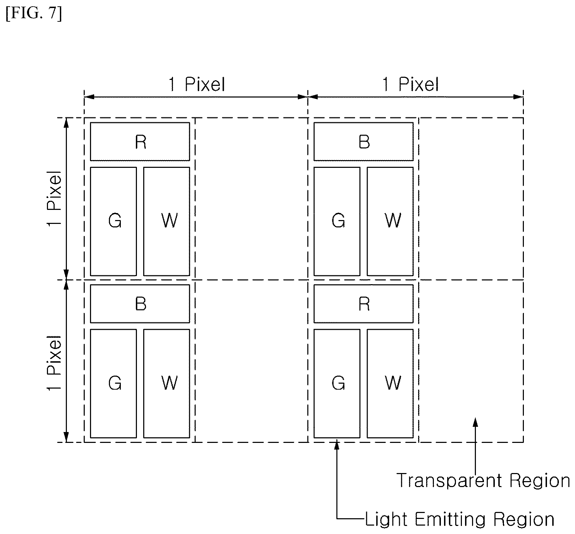

Referring to FIGS. 5 and 7, the pixel of the display panel 21 may include a light emitting region and a transparent region. In the light-emitting region, subpixels of Red, Green, White (RGW) or Blue, Green, White (BGW) can be arranged adjacent to each other, and the transparent region having no subpixel may be arranged next to the light-emitting region.

Accordingly, the display panel 21 having a plurality of pixels may not only display images but also transmit light. The display panel 21 may be referred to as a transparent display panel or a transparent OLED panel.

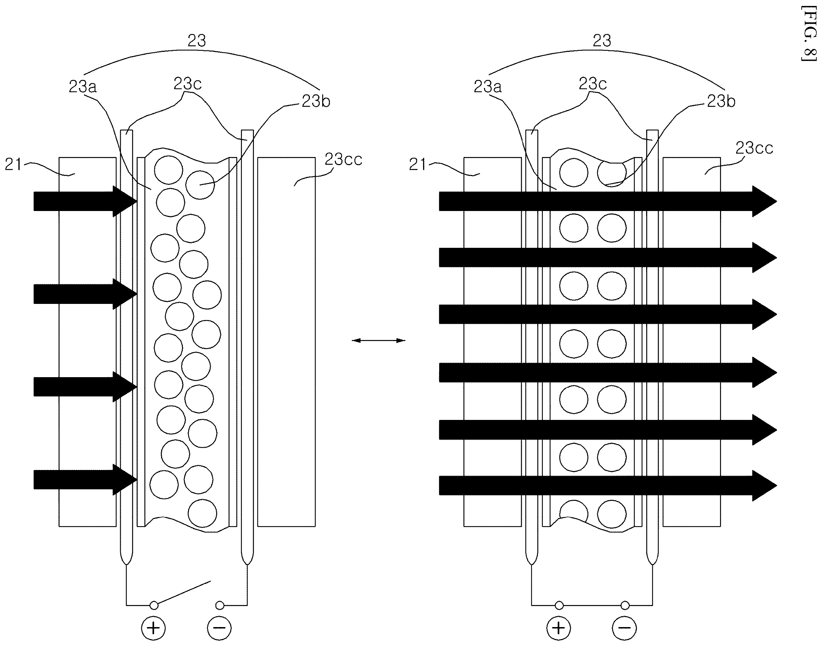

Referring to FIGS. 5 and 8, the sheet 23 may be a Suspended Particle Display (SPD) sheet. Alternatively, the sheet 23 may be a Polymer Dispended Liquid Crystal (PDLC) sheet or an EC Electronic Chromic sheet. The sheet 23 may be referred to as a window 23 or a smart window 23. The suspended particle display may be referred to as a distributed particle rotation display. The sheet 23 may include a cell 23a, a suspended particle 23b, and a conductive material 23c. The cell 23a may be a suspension liquid or a suspension film, and the suspended particles 23b may be suspended inside the cell 23a. The suspended particles 23b may be colored particles, such as black. The conductive materials 23c may be coated on both surfaces of the cell 23a, and may be referred to as transparent electrodes 23c. For example, glass 23cc may be coupled or attached to the rear surface of the conductive material 23c.

If no electricity is supplied to the cell 23a (see the drawing of power-off on the left side of FIG. 8), the suspended particles 23b may be arranged in an irregular manner within the cell 23a, and thus, the light may not be able to pass through the cell 23a.

If electricity is supplied to the cell 23a through the conductive materials 23c (see the drawing of power-on on the right side of FIG. 8), the suspended particles 23b may be aligned in one direction within the cell 23a, and thus, the light may be able to pass through the cell 23a through a gap between the suspended particles 23b. Furthermore, the cross-sectional area of the suspended particles 23b that block the light passing through the cell 23a may be adjusted, by adjusting the amount of electricity supplied to the cell 23a. The sheet 23 may be (semi)transparent or opaque. As the amount of electricity supplied to the cell 23a decreases, the light transmittance of the sheet 23 may decrease, and if electricity is not supplied to the cell 23a, the sheet 23 may become opaque.

When outputting an image using a transparent display panel 21, the clarity of the image output from the display panel 21 may be enhanced by making the sheet 23 to be opaque. The opaque sheet 23 may be black. The state in which the display panel 21 is turned on but the electricity supply to the sheet 23 is turned off may be referred to as a watching mode.

When not outputting an image using the transparent display panel 21, the sheet 23 may be made (semi)transparent. In this case, a user may look the inside of the first housing 11 through the display 20. A user may look the amplifiers 43 inside the first housing 11 and focus on audio. The state in which the display panel 21 is turned off but the power supply to the sheet 23 is turned on may be referred to as an audio mode.

When outputting an image using the transparent display panel 21, the sheet 23 may be made (semi)transparent. In this case, a user may simultaneously see the image output from the display 20 and the inside of the first housing 11. The state in which the display panel 21 is turned on and the power supply to the sheet 23 is turned on may be referred to as a multi-mode.

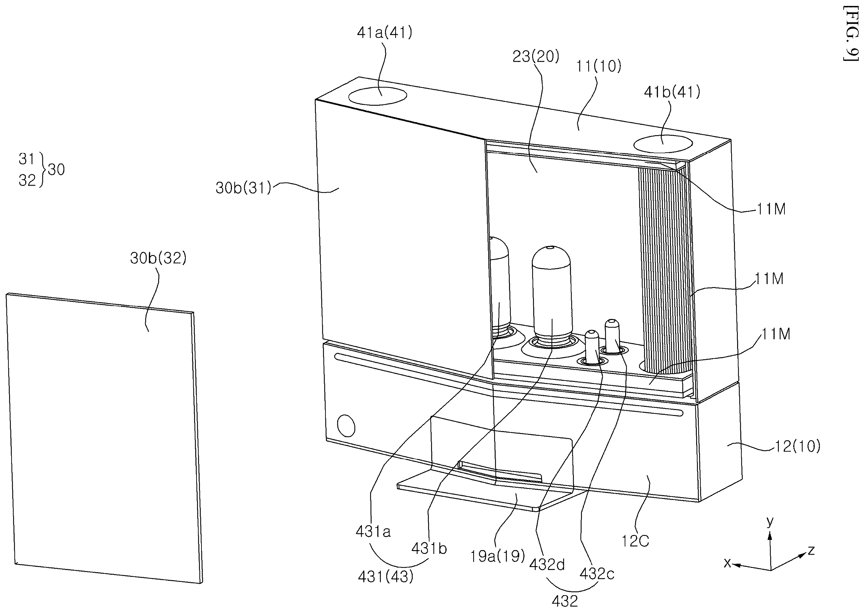

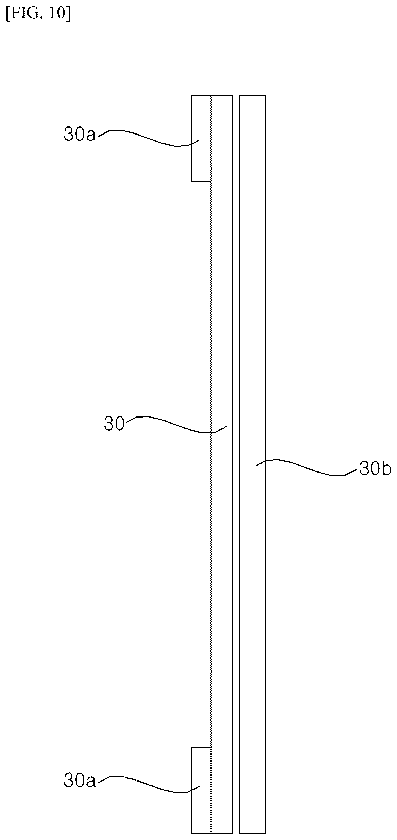

Referring to FIGS. 9 and 10, the cover 30 may be positioned on the open rear surface of the first housing 11, and may be a rectangular panel corresponding to the shape of the first housing 11. A metal sheet 30a may be coupled or attached to the front surface of the cover 30 while being adjacent to the perimeter of the cover 30. A plurality of metal sheets 30a may be arranged along the perimeter of the cover 30. The cover sheet 30b may cover the rear surface of the cover 30, and may be coupled or attached to the rear surface of the cover 30. For example, the cover sheet 30b may include an acrylic material.

There may be provided one or two or more covers 30. A first cover 31 may be adjacent to the left side of the first housing 11, and a second cover 32 may be adjacent to the right side of the first housing 11. Each of the first and second covers 31, 32 may be flat. The first and second covers 31, 32 may be arranged at an angle to each other, and the height of the cover 30 may increase as it approaches the boundary between the first and second covers 31, 32.

A magnet 11M may be mounted on the rear end of the first housing 11. A plurality of magnets 11M may be arranged along the rear end (i.e., the perimeter of the square) of the first housing 11. The cover 30 may be detachably coupled to the rear end of the first housing 11 by magnetically coupling the metal sheets 30a to the magnets 11M. Accordingly, a user may easily detach the cover 30 from the first housing 11 for repair or replacement of the amplifiers 43 inside the first housing 11.

The cover 30 may be a Suspended Particle Display (SPD) sheet, such as the sheet 23 (see FIGS. 5 and 8). Alternatively, the cover 30 may be a Polymer Dispended Liquid Crystal (PDLC) sheet or an Electronic Chromic (EC) sheet. The cover 30 may be referred to as a window 30 or a smart window 30. The suspended particle display may be referred to as a distributed particle rotation display. The cover 30 may have the same configuration as the sheet 23. That is, the transparency of the cover 30 may be adjusted by adjusting the amount of current supplied to the cells of the cover 30. The cover 30 may be (semi)transparent or opaque. As the amount of electricity supplied to the cells of the cover 30 decreases, the light transmittance of the cover 30 may decrease, and when no electricity is supplied to the cells of the cover 30, the cover 30 may become opaque. Meanwhile, the light transmittance of the first cover 31 and the second cover 32 may be adjusted independently.

Accordingly, the internal space of the first housing 11 cannot be seen from the rear of the electronic device 1 by making the cover 30 to be opaque. Alternatively, the internal space of the first housing 11 can be seen from the rear of the electronic device 1 by making the cover 30 to be (semi)transparent. In this case, a user may look the amplifiers 43 inside the first housing 11 through the cover 30. Furthermore, the transparency of the first cover 31 and the second cover 32 may be adjusted differently to specify an area where the internal space of the first housing 11 can be seen from the rear of the electronic device 1.

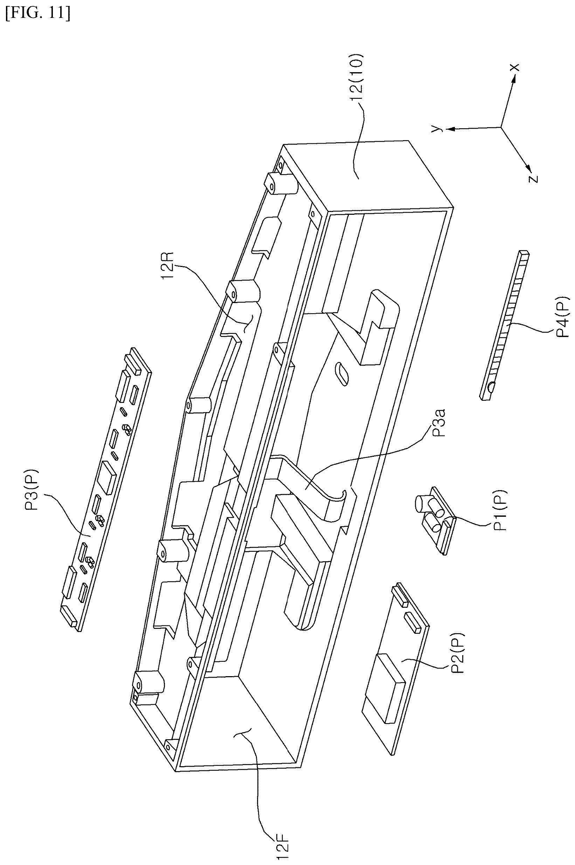

Referring to FIG. 11, a board P may be mounted inside the second housing 12. A plurality of electronic components may be mounted on the board P. The board P may be a Printed Circuit Board (PCB) and may be referred to as a substrate P. A plurality of boards P may be mounted on the second housing 12.

A power supply board P1 may supply power to each component of the electronic device. The main board P2 may control each component of the electronic device. A timing controller board P3 may be electrically connected to a cable P3a such as an Flexible Flat Cable (FFC), and the cable P3a may be electrically connected to the display panel 21 through a source PCB 21a and a cable 21b. The timing controller board P3 may provide digital video data and a timing control signal to the display panel 21 through the source PCB 21a. A key board P4 may process signals transmitted/received to/from the electronic device. A user's input signal may be input to the key board P4 to control the electronic device.

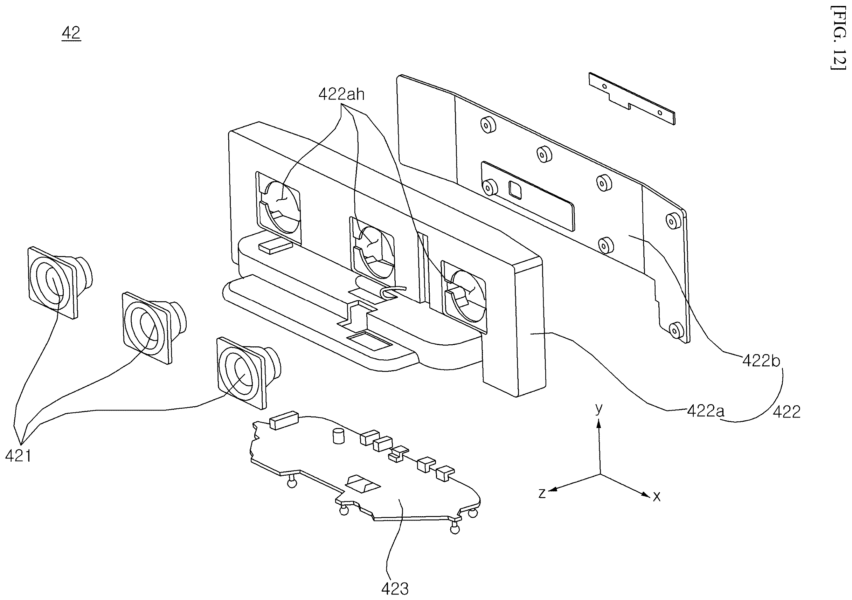

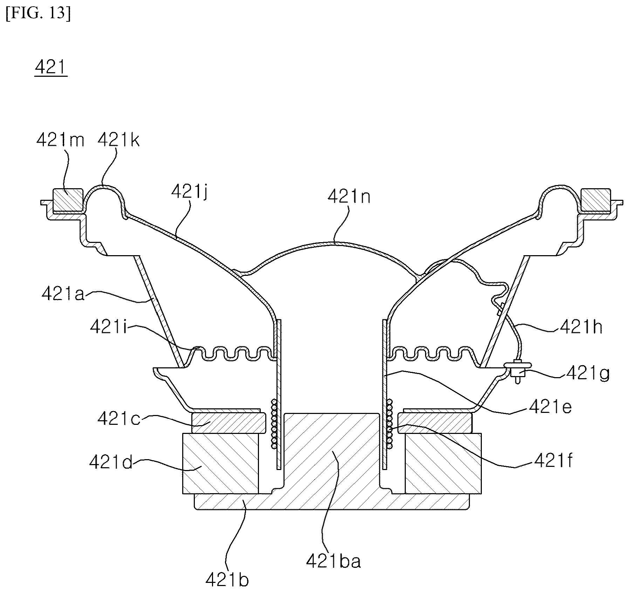

Referring to FIGS. 12 and 13, a speaker assembly 42 may include a speaker 421, an enclosure 422, and a sound board 423.

A speaker frame 421a may support the components of the speaker 421. The speaker frame 421a may be installed inside the enclosure 422. A bottom plate 421b may form one side of the speaker 421. A pole piece 421ba may protrude from the central portion of the bottom plate 421b, and may have a hollow cylinder or solid cylinder shape. A top plate 421c may be spaced apart from the bottom plate 421b, and may have a ring shape. A portion of the pole piece 421ba may penetrate the top plate 421c, and an air gap may be formed between the top plate 421c and the pole piece 421ba.

A magnet 421d may be positioned between the bottom plate 421b and the top plate 421c, and may have a ring shape. A portion of the pole piece 421ba may penetrate the magnet 421d. A bobbin 421e may be positioned in the air gap between the pole piece 421ba and the top plate 421c and in the air gap between the pole piece 421ba and the magnet 421d, and may have a hollow cylinder shape extending in the longitudinal direction of the pole piece 421ba. A coil 421f may be formed on or wound around the outer circumferential surface of the bobbin 421e, and may be referred to as a voice coil 421f. A terminal 421g and a tinsel wire 421h may transmit electrical energy output from the amplifier to the coil 421f.

A spider 421i may be elastic. The spider 421i may be positioned between the bobbin 421e and the speaker frame 421a, and may be coupled to the bobbin 421e and the speaker frame 421a. The spider 421i may support the bobbin 421e, and may be referred to as a damper 421i.

One side of a diaphragm 421j may be coupled or attached to the bobbin 421e, and the other side of the diaphragm 421j may be supported by an elastic edge 421k. For example, the diaphragm 421j may have a cone or dome shape. A gasket 421k may be provided on a lateral surface of the edge 421k, and may prevent interference of surrounding apparatus with the vibrating diaphragm 421j. A dust cap 421n may cover the central portion of the diaphragm 421j, and may block dust or the like from flowing into a magnetic circuit.

When a magnetic field line is formed by the magnet 421d in the gap and a current flows through the coil 421f, a Lorentz force may be generated. The magnitude of the Lorentz force may be proportional to the magnitude of the magnetic field line (magnetic flux density), the amount of current, and the length of the wound coil, and the direction of the force may be perpendicular to the plane formed by the magnetic flux density and the current.

Accordingly, the diaphragm 421j may vibrate in the longitudinal direction of the pole piece 421ba. With reference to FIG. 13, when the diaphragm 421j moves upward, a (+) negative pressure may be generated, and when the diaphragm 421j moves downward, a (-) negative pressure may be generated, and the speaker 421 may provide sound upward. According to the vibration of the diaphragm 421j, the air inside the enclosure 422 may also resonate and its pressure may change.

The enclosure 422 may include a body 422a and a cover 422b. The body 422a may have an internal space, and the cover 422b may be coupled to the body 422a to cover the internal space of the body 422a. The body 422a may include a mount hole 422ah in which a speaker 421 is mounted. A plurality of speakers 421 may be mounted in the plurality of mount holes 422ah. For example, three speakers 421 may be arranged in a horizontal direction. The enclosure 422 may be positioned in an opening 12R formed in the rear surface of the second housing 12 or may be inserted into the inside of the housing 12 through the opening 12R. The plurality of speakers 421 may be positioned in the opening 12R formed in the rear surface of the second housing 12 or may be inserted into the inside of the housing 12 through the opening 12R.

The speaker horn 424 (see FIGS. 1 and 3) may have a horn shape, and may be inserted into the inside of the housing 12 through an opening 12F formed in the front surface of the second housing 12. An inlet 424a of the speaker horn 424 may be formed to be long in the direction in which the speakers 421 are arranged, i.e., in the horizontal direction, and may be aligned with the speakers 421. An outlet 424b of the speaker horn 424 may be opposite to the inlet 424a, and may have a wider width than the inlet 424a. The speaker horn 424 may be referred to as a diffuser 424. Accordingly, the sound of the speaker 421 may spread forward through the speaker horn 424.

The sound board 423 may be positioned below the enclosure 422. The sound board 423 may be mounted in the second housing 12 (see FIG. 11). The sound board 423 may control the operation of the speaker 421 mounted in the enclosure 422.

Meanwhile, the housing cover 12C (see FIGS. 3 and 9) may be coupled to the rear surface of the second housing 12, and may cover the enclosure 422 inserted into the inside of the second housing 12 through the opening 12R.

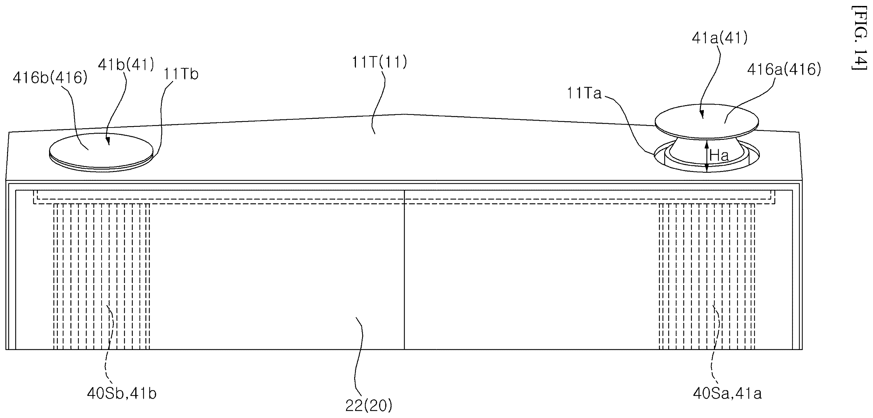

Referring to FIGS. 14 and 3, a supporter 40S may be vertically elongated, and inserted into the inside of the first housing 11. The supporter 40S may have a hollow cylinder shape that is vertically elongated. The supporter 40S may be referred to as a barrel 40S or a pipe 40S. There may be one supporter 40S or two or more supporters 40S. The first supporter 40Sa may be adjacent to the left part 11L of the first housing 11, and may be inserted into the inside of the first housing 11 through the first hole 11Ua of the upper part 11U of the first housing 11 and coupled onto the lower part 11D of the first housing 11. The second supporter 40Sb may be adjacent to the right part 11R of the first housing 11, and may be inserted into the inside of the first housing 11 through the second hole 11Ub of the upper part 11U of the first housing 11 and coupled onto the lower part 11D of the first housing 11. The top cover 11T may be coupled to the upper part 11U of the first housing 11, and may have holes 11Ta, 11Tb aligned with the upper ends of the first and second supporters 40Sa, 40Sb. Alternatively, the top cover 11T may be formed as a one body with the upper part 11U of the first housing 11.

A speaker assembly 41 may be positioned within the supporter 40S. The speaker assembly 41 may be referred to as a pop-up speaker assembly 41 or a moving speaker assembly 41. A first speaker assembly 41a may be mounted within the internal space of the first supporter 40Sa. A second speaker assembly 41b may be mounted within the internal space of the second supporter 40Sb.

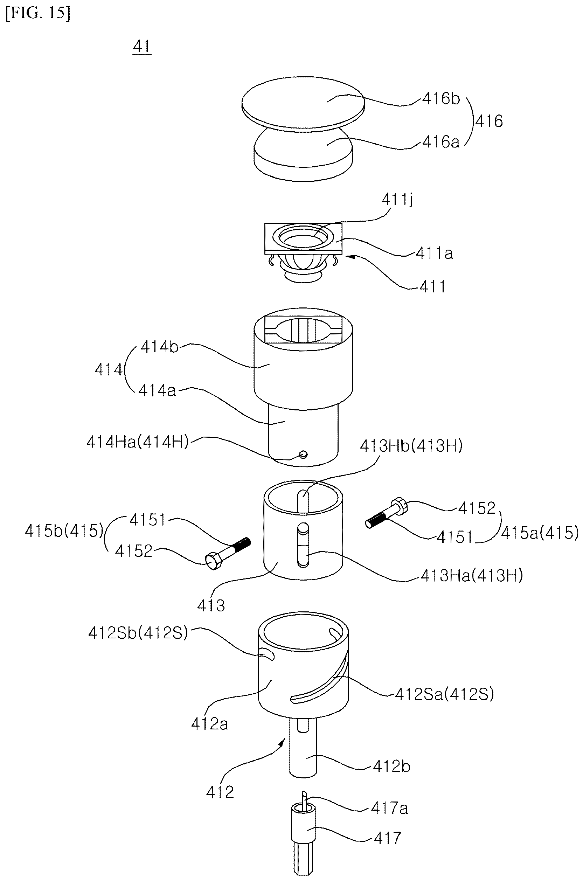

Referring to FIGS. 15 to 17, the speaker assembly 41 may include a speaker 411, a fixed body 412, a rotating body 413, a moving body 414, a pin 415, a head 416, and a motor 417.

The speaker 411 may output sound. A diaphragm 411j of the speaker 411 may face upward and vibrate vertically. That is, the sound output direction of the speaker 411 may face upward. For example, the configuration of the speaker 411 may be the same as that of the speaker 421 described above with reference to FIGS. 12 and 13.

The fixed body 412 may be positioned inside the supporter 40S (see FIGS. 3 and 14). The fixed body 412 may be fixed to the supporter 40S. The height and angle of the fixed body 412 may be fixed. The fixed body 412 may have an overall funnel shape. The fixed body 412 may include a receiving portion 412a and a fixing portion 412b. The receiving portion 412a may have a hollow cylinder shape. The fixing portion 412b may be formed at the bottom of the receiving portion 412a, and may have a hollow cylinder shape with a smaller diameter than the receiving portion 412a. A guide slot 412S may be formed on the lateral surface of the fixed body 412, and may extend in a helix from the bottom of the fixed body 412 toward the top. A first guide slot 412Sa and a second guide slot 412Sb may be spaced apart from each other in the circumferential direction of the fixed body 412. One end of the first guide slot 412Sa and one end of the second guide slot 412Sb may be spaced apart from each other by 180 degrees.

The rotating body 413 may be inserted into the inside of the fixed body 412. The rotating body 413 may have a cylindrical shape that is opened upward. The bottom of the rotating body 413 may be mounted on the bottom of the fixed body 412. The rotating body 413 may be rotatably coupled to the fixed body 412, and may not move vertically. The guide hole 413H may be formed on the lateral surface of the rotating body 413, and may extend vertically from the bottom of the rotating body 413 toward the top. A first guide hole 413Ha and a second guide hole 413Hb may be spaced apart from each other in the circumferential direction of the rotating body 413. The first guide hole 413Ha and the second guide hole 413Hb may be spaced apart from each other by 180 degrees.

The moving body 414 may be opposite to the fixed body 412 with respect to the rotating body 413. The moving body 414 may include an insertion portion 414a and a mounting portion 414b. The insertion portion 414a may have a cylindrical shape, and may be inserted into the inside of the rotating body 413. The mounting portion 414b may be formed on the top of the insertion portion 414a, and may have a cylindrical shape with a diameter larger than that of the insertion portion 414a. The mounting portion 414b may form a step with respect to the insertion portion 414a, and the step may face the upper end of the fixed body 412 and the upper end of the rotating body 413. The moving body 414 may be rotatably and vertically movably coupled to the fixed body 413. A fixing hole 414H may be formed on the lateral surface of the insertion portion 414a. The fixing hole 414H may be adjacent to the bottom of the insertion portion 414a. A first fixing hole 414Ha may face the first guide hole 413Ha, and a second fixing hole 414Hb may face the second guide hole 413Hb. The first guide hole 413Ha and the second guide hole 413Hb may be spaced apart from each other by 180 degrees.

The pin 415 may be coupled or fixed to the fixing hole 414H by penetrating the guide slot 412S and the guide hole 413H. For example, the pin 415 may be a bolt or a screw, and may be screw-fastened to the fixing hole 414H. The pin 415 may be referred to as a holder 415. The pin 415 may include a pin body 4151 and a pin head 4152. The pin body 4151 may be elongated, and a screw thread may be formed on the outer circumferential surface of the pin body 4151. The pin head 4152 may be formed at the distal end of the pin body 4151, and may have a larger diameter than the pin body 4151. The pin body 4151 of the first pin 415a may be fixed to the first fixing hole 414Ha by passing through the first guide slot 412Sa and the first guide hole 413Ha, and the pin head 4152 of the first pin 415a may be engaged with the lateral surface of the receiving portion 412a of the fixed body 412. The pin body 4151 of the second pin 415b may be fixed to the second fixing hole 414Hb by passing through the second guide slot 412Sb and the second guide hole 413Hb, and the pin head 4152 of the second pin 415b may be engaged with the lateral surface of the receiving portion 412a of the fixed body 412.

The speaker 411 may be mounted inside the mounting portion 414b of the moving body 414. A speaker frame 411a of the speaker 411 may be mounted on the mounting portion 414b. The mounting portion 414b may be an enclosure of the speaker 411.

The head 416 may be opposite to the moving body 414 with respect to the speaker 411. The head 416 may cover the speaker 411, and be coupled to the mounting portion 414b of the moving body 414. The head 416 may include a first part 416a having a truncated cone shape that covers the speaker 411 and a second part 416b having an inverted truncated cone shape that is coupled to the first part 416a. The first part 416a may include holes through which sound of the speaker 411 passes. The sound of the speaker 411 may be reflected by the lower surface of the second part 416b and spread 360 degrees in the horizontal direction. The head 416 may be a phase plug that forms the sound of the speaker 411 omnidirectionally.

The motor 417 may be mounted on the fixing portion 412b of the fixed body 412. The motor 417 may be inserted into the fixing portion 412b of the fixed body 412, and a rotation shaft 417a of the motor 417 may be fixed to the bottom of the rotating body 413. The rotation shaft 417a of the motor 417 may be aligned in a vertical direction. Gear(s) may be formed between the rotation shaft 417a of the motor 417 and the bottom of the rotating body 413. The motor 417 may be an electric motor that is able to adjust the rotation direction, rotation speed, and rotation angle of the rotation shaft 417a.

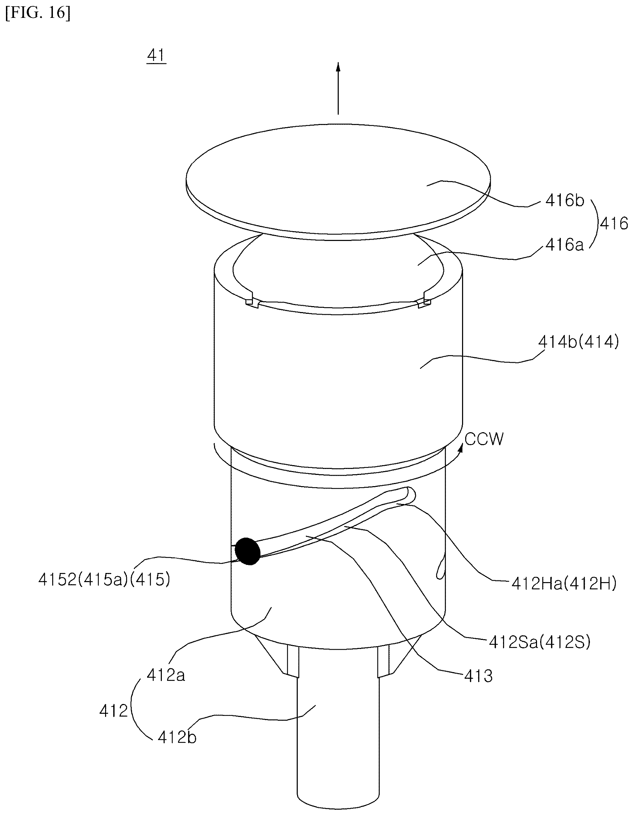

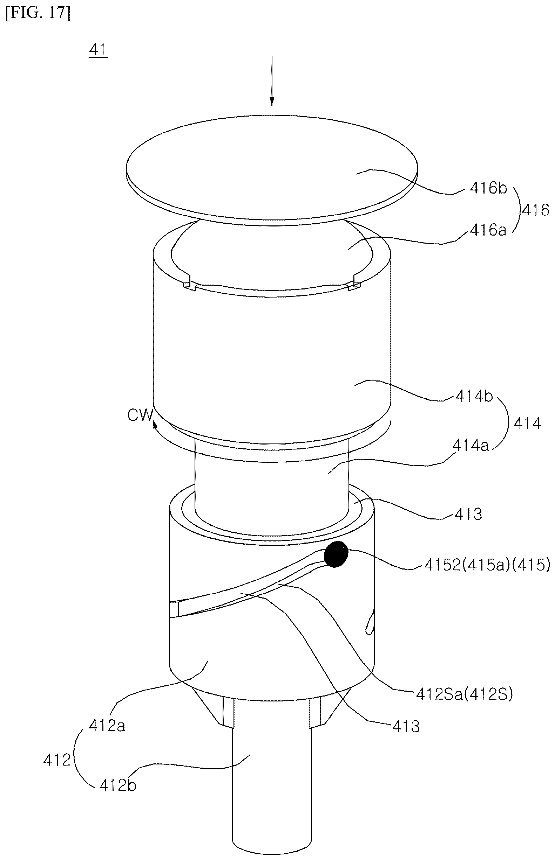

Referring to FIGS. 16 and 17 in order, when the rotating body 413 fixed to the rotation shaft 417a rotates in a first rotation direction (counterclockwise, CCW) in response to the operation of the motor 417, the first and second pins 415a, 415b may move along the first and second guide slots 412Sa, 412Sb and the first and second guide holes 413Ha, 413Hb. That is, the first and second pins 415a, 415b and the moving body 414 fixed to the first and second pins 415a, 415b may move upward while rotating in the first rotation direction (counterclockwise, CCW) together with the rotating body 413. Accordingly, the moving body 414 and the speaker 411 and head 416 mounted on the moving body 414 may rise.

Each of the first and second guide slots 412Sa, 412Sb may include a horizontal slot 412H. The horizontal slot 412H may form a portion of each of the first and second guide slots 412Sa, 412Sb, and may form the upper end of each of the first and second guide slots 412Sa, 412Sb. The horizontal slot 412H may extend in a horizontal direction (i.e., a circumferential direction). The pin bodies 4151 of the first and second pins 415a, 415b that rise to the horizontal slots 412H may be engaged with the horizontal slots 412H. Accordingly, the horizontal slots 412H and the pins 415a, 415b engaged with these may prevent the moving body 414 from descending due to its own weight.

Referring to FIGS. 16 and 17 in reverse order, when the rotating body 413 fixed to the rotation shaft 417a rotates in a second rotation direction (clockwise, CW) in response to the operation of the motor 417, the first and second pins 415a, 415b may move along the first and second guide slots 412Sa, 412Sb and the first and second guide holes 413Ha, 413Hb. That is, the first and second pins 415a, 415b and the moving body 414 fixed to the first and second pins 415a, 415b may move downward while rotating in the second rotation direction (clockwise, CW) together with the rotating body 413. Accordingly, the moving body 414 and the speaker 411 and head 416 mounted on the moving body 414 may descend.

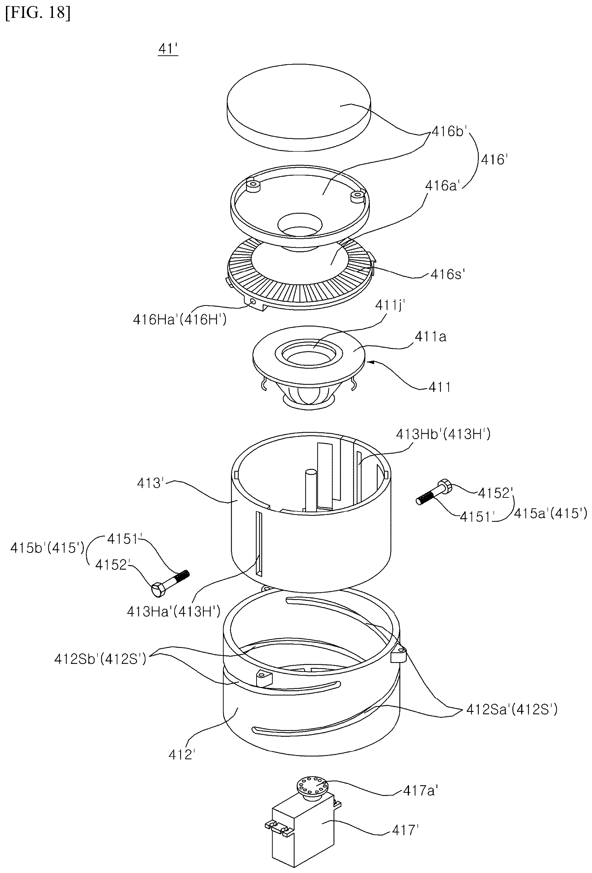

Referring to FIG. 18, a speaker assembly 41' may be positioned inside the supporter 40S (see FIG. 14) instead of the speaker assembly 41 (see FIGS. 15 to 17). The speaker assembly 41' may include a speaker 411', a fixed body 412', a rotating body 413', a pin 415', a head 416', and a motor 417'.

The speaker 411' may output sound. A diaphragm 411j' of the speaker 411' may face upward and vibrate vertically. That is, the sound output direction of the speaker 411' may face upward. For example, the configuration of the speaker 411' may be the same as the configuration of the speaker 421 described above with reference to FIGS. 12 and 13.

The fixed body 412' may be positioned inside the supporter 40S (see FIGS. 3 and 14). The fixed body 412' may be fixed to the supporter 40S. The height and angle of the fixed body 412' may be fixed. The fixed body 412' may have a cylindrical shape that is opened upward. The guide slot 412S' may be formed on the lateral surface of the fixed body 412', and may extend in a helix from the bottom to the top of the fixed body 412'. The first guide slot 412Sa' and the second guide slot 412Sb' may be spaced apart from each other in the circumferential direction of the fixed body 412'. One end of the first guide slot 412Sa' and one end of the second guide slot 412Sb' may be spaced apart from each other by 180 degrees.

The rotating body 413' may be inserted into the inside of the fixed body 412'. The rotating body 413' may have a cylindrical shape that is opened upward. The bottom of the rotating body 413' may be mounted on the bottom of the fixed body 412'. The rotating body 413' may be rotatably coupled to the fixed body 412', and may not move in a vertical direction. A guide hole 413H' may be formed on a lateral surface of the rotating body 413', and may extend vertically from the bottom to the top of the rotating body 413'. The first guide hole 413Ha' and the second guide hole 413Hb' may be spaced apart from each other in the circumferential direction of the rotating body 413'. The first guide hole 413Ha' and the second guide hole 413Hb' may be spaced apart from each other by 180 degrees.

The head 416' may be opposite to the rotating body 413'. The speaker 411' may be positioned between the rotating body 413' and the head 416', and may be fixed to the head 416'. The head 416' may include a first part 416a' in the shape of a truncated cone that covers the speaker 411' and a second part 416b' in the shape of an inverted truncated cone that is coupled to the first part 416a'. The first part 416a' may include holes 416s' through which sound of the speaker 411' passes. The sound of the speaker 411' may be reflected by the lower surface of the second part 416b' and may spread 360 degrees in the horizontal direction. The head 416' may be a phase plug that forms the sound of the speaker 411' omnidirectional.

The pin 415' may be coupled or fixed to the first part 416a' of the head 416' by penetrating the guide slot 412S' and the guide hole 413H'. For example, the pin 415' may be a bolt or a screw, and may be screw-fastened to a fixing hole 416H' formed in a rim of the first part 416a'. The pin 415' may be referred to as a holder 415'. The pin 415' may include a pin body 4151' and a pin head 4152'. The pin body 4151' may be elongated, and a screw thread may be formed on the outer circumferential surface of the pin body 4151'. The pin head 4152' may be formed at the distal end of the pin body 4151', and may have a larger diameter than the pin body 4151'. The pin body 4151' of the first pin 415a' may be fixed to a first fixing hole 416Ha' by penetrating the first guide slot 412Sa' and the first guide hole 413Ha', and the pin head 4152' of the first pin 415a' may be engaged with the lateral surface of the fixed body 412'. The pin body 4151' of the second pin 415b' may be fixed to a second fixing hole 416Hb' by penetrating the second guide slot 412Sb' and the second guide hole 413Hb', and the pin head 4152' of the second pin 415b' may be engaged with the lateral surface of the fixed body 412'.

The motor 417' may be adjacent to the bottom of the fixed body 412', and may be mounted on the bottom of the fixed body 412' and/or inner side of the supporter 40S (see FIG. 14). The rotation shaft 417a' of the motor 417' may penetrate the fixed body 412' and be fixed to the bottom of the rotating body 413'. The rotation shaft 417a' of the motor 417' may be vertically aligned. Gear(s) may be formed between the rotation shaft 417a' of the motor 417' and the bottom of the rotating body 413'. The motor 417' may be an electric motor capable of adjusting the rotation direction, rotation speed, and rotation angle of the rotation shaft 417a'.

When the rotating body 413' fixed to the rotation shaft 417a' rotates in the first rotation direction (counterclockwise, CCW) in response to the operation of the motor 417', the first and second pins 415a', 415b' may move along the first and second guide slots 412Sa', 412Sb' and the first and second guide holes 413Ha', 413Hb'. That is, the first and second pins 415a', 415b' and the head 416' fixed to the first and second pins 415a', 415b' may move upward while rotating in the first rotation direction (counterclockwise, CCW) together with the rotating body 413'. Accordingly, the speaker 411' mounted on the head 416' may also rise.

When the rotating body 413' fixed to the rotation shaft 417a' rotates in the second rotation direction (clockwise, CW) in response to the operation of the motor 417', the first and second pins 415a', 415b' may move along the first and second guide slots 412Sa', 412Sb' and the first and second guide holes 413Ha', 413Hb'. That is, the first and second pins 415a', 415b' and the head 416' fixed to the first and second pins 415a', 415b' may move downward while rotating in the second rotation direction (clockwise, CW) together with the rotating body 413'. Accordingly, the speaker 411' mounted on the head 416' may also descend.

Referring again to FIG. 14, the height of the first speaker assembly 41a and the height of the second speaker assembly 41b may be adjusted independently. For example, the head 416 of the first speaker assembly 41a may be raised upward by a given distance Ha from a top cover 11T (see FIG. 14). The first speaker assembly 41a may provide sound in a horizontal direction from the top of the top cover 11T. For example, the head 416 of the second speaker assembly 41b may be raised upward by a given distance Hb from the top cover 11T (see FIG. 1). The second speaker assembly 41b may provide sound in a horizontal direction from the top of the top cover 11T.

Alternatively, the height of the first speaker assembly 41a and the height of the second speaker assembly 41b may be synchronized with each other. The head 416 of the first speaker assembly 41a and the head 416 of the second speaker assembly 41b may be raised upward by a given distance from the top cover 11T. The first and second speaker assemblies 41a, 41b may provide sound in a horizontal direction from the top of the top cover 11T.

Meanwhile, a light source may be disposed on the head 416 of the first speaker assembly 41a and the head 416 of the second speaker assembly 41b. The light source may be a Light Emitting Diode (LED). The light source may have adjustable brightness and provide various colors. For example, the light source may be mounted in a ring shape on the rim of the head 416.

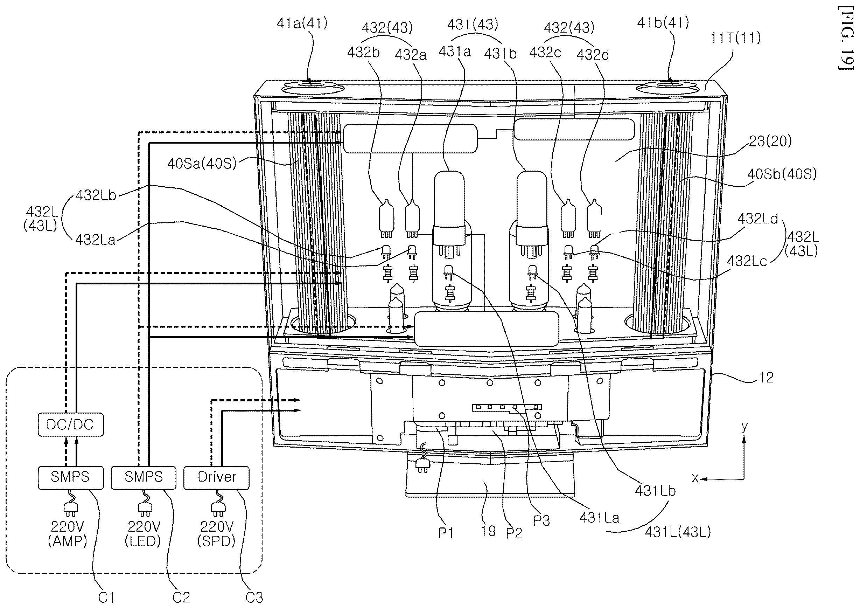

Referring to FIG. 19, the amplifier 43 of the audio unit 40 may amplify a signal from a source device and provide it to the speakers 41, 42 (see FIG. 3). The amplifier 43 may be a preamplifier. The amplifier 43 may be a vacuum tube amplifier. The amplifier 43 may include a filament that emits electrons, a plate that receives electrons, and a grid that adjusts the amount of electrons moving from the filament to the plate.

Inner amplifiers 431 may be positioned in the central portion of the first housing 11, and mounted on the bottom part 11D of the first housing 11. For example, a first inner amplifier 431a and a second inner amplifier 431b may be spaced apart from each other in a left-right direction. Outer amplifiers 432 may be positioned outside the inner amplifiers 431, and mounted on the bottom part 11D of the first housing 11. For example, a first outer amplifier 432a and a second outer amplifier 432b may be positioned in the left of the first inner amplifier 431a, and may be spaced apart from each other in the front-rear direction. For example, a third outer amplifier 432c and a fourth outer amplifier 432d may be positioned in the right of the second inner amplifier 431b, and may be spaced apart from each other in the front-rear direction.

A switching mode power supply (SMPS) C1 may be electrically connected to the amplifiers 43, and may adjust the turn-on/off of the filament of the amplifiers 43.

Each of the plurality of amplifiers 43 may include a light source 43L. The light source 43L may be a light emitting diode (LED). A first inner light source 431La may be mounted inside the first inner amplifier 431a, and may provide light to the outside. A second inner light source 431Lb may be mounted inside the second inner amplifier 431b, and may provide light to the outside. A first outer light source 432La may be mounted inside the first outer amplifier 432a, and may provide light to the outside. A second outer light source 432Lb may be mounted inside the second outer amplifier 432b, and may provide light to the outside. A third outer light source 432Lc may be mounted inside the third outer amplifier 432c, and may provide light to the outside. A fourth outer light source 432Ld may be mounted inside the fourth outer amplifier 432d, and may provide light to the outside.

A switching mode power supply (SMPS) C2 may be electrically connected to the amplifiers 43, and may adjust the turn-on/off of the light source 43L of the amplifier 43. The SMPS C2 may adjust the brightness of the light source 43L. In addition, the SMPS C2 may control the operation of the motor 417 of the speaker assembly 41 through a control board and a motor driver PCB.

A driver C3 may be electrically connected to the sheet 23 and the cover 30. The driver C3 may be electrically connected to the sheet 23, the first cover 31, and the second cover 32. The driver C3 may adjust the transparency of the sheet 23, the first cover 31, and the second cover 32 by adjusting the amount of current flowing through each of the sheet 23, the first cover 31, and the second cover 32.

Control of the electronic device using the aforementioned SMPS C1, SMPS C2, driver C3, etc. may be directly requested by a user using an interface provided in the electronic device, or may be remotely requested by a user using a remote controller or terminal connected to the electronic device using Bluetooth, etc.

Referring to FIGS. 1 to 19, the electronic device includes: a housing having an opening in a forward direction; a display panel which is light transmissive, and which covers the opening; a sheet coupled to a rear surface of the display panel; an amplifier mounted in an inner space of the housing; and a speaker which is coupled to the housing, and which provides sound to an outside of the housing, wherein a degree of transparency of the sheet is variable.

The sheet includes: a cell; suspended particles suspended within the cell; and a conductive material coated on the surface of the cell, in which the suspended particles are aligned in one direction, when electricity is supplied to the cell through the conductive material.

The sheet is a suspended particle display (SPD) sheet.

The electronic device further includes a cover covering an opening formed on a rear surface of the housing, and a degree of transparency of the cover is variable.

The cover includes: a first cover covering a portion of the opening formed in the rear surface of the housing; and a second cover covering a remaining portion of the opening, in which a degree of transparency of the first cover and a degree of transparency of the second cover are independent of each other.

The amplifier includes a plurality of amplifiers spaced apart from each other, and each of the plurality of amplifiers is a vacuum tube amplifier, and has a light source whose brightness is adjustable.

The electronic device further includes: a fixed body mounted inside the housing, wherein the fixed body has a spiral guide slot formed on a lateral surface of the fixed body; a rotating body rotatable inside the fixed body, wherein the rotating body has a linear guide hole formed on a lateral surface of the rotating body; a motor rotating the rotating body; and a pin penetrating the guide slot and the guide hole, in which the speaker is coupled to a distal end of the pin, and able to linearly move in a longitudinal direction of the guide hole while rotating in a rotation direction of the rotating body.

The electronic device further includes a head covering the speaker, and the housing includes a hole which is formed on one side of the housing, and through which the head passes.

The hole includes a pair of holes spaced apart from each other along the one side of the housing, the head includes a pair of heads positioned in the pair of holes, and the speaker includes a pair of speakers coupled to the pair of heads.

The electronic device further includes: a supporter which is positioned in the internal space of the housing, and extends in a linear movement direction of the speaker; and a speaker assembly which has the fixed body, the rotating body, the pin, the motor, and the speaker, and which is mounted inside the supporter.

The electronic device further includes a head which is opposite to the rotating body with respect to the speaker, and to which the speaker is coupled, and the distal end of the pin is coupled to the head.

The electronic device further includes a moving body which is positioned between the speaker and the rotating body, and to which the speaker is coupled, and the distal end of the pin is coupled to the moving body.

The fixed body has a cylindrical shape that is open upward, the rotating body has a cylindrical shape that is open upward inside the fixed body, the guide slot includes a pair of guide slots spaced apart from each other in a circumferential direction of the fixed body, the guide hole includes a pair of guide holes which extend in a vertical direction, and which are spaced apart from each other in a circumferential direction of the rotating body, and the pin includes a pair of pins which penetrate the pair of guide slots and the pair of guide holes.

The housing includes: a first housing which provides an internal space in which the amplifier is positioned, and to which the display panel and the sheet are coupled; and a second housing coupled to the first housing, and the speaker is coupled to the second housing, and provides sound in a forward direction of the second housing.

The sheet becomes opaque when the display panel outputs an image, and becomes transparent when the display panel does not output an image.

Certain embodiments or other embodiments of the disclosure described above are not mutually exclusive or distinct from each other. Any or all elements of the embodiments of the disclosure described above may be combined or combined with each other in configuration or function.

For example, a configuration "A" described in one embodiment of the disclosure and the drawings and a configuration "B" described in another embodiment of the disclosure and the drawings may be combined with each other. Namely, although the combination between the configurations is not directly described, the combination is possible except in the case where it is described that the combination is impossible.

Although embodiments have been described with reference to a number of illustrative embodiments thereof, it should be understood that numerous other modifications and embodiments can be devised by those skilled in the art that will fall within the scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. An electronic device comprising:
a housing having an opening in a forward direction;
a display panel which is light transmissive, and which covers the opening;
a sheet coupled to a rear surface of the display panel;
an amplifier mounted in an inner space of the housing; and
a speaker which is coupled to the housing, and which provides sound to an outside of the housing,
wherein a degree of transparency of the sheet is variable.

2. The electronic device of claim 1, wherein the sheet comprises:
a cell;
suspended particles suspended within the cell; and
a conductive material coated on the surface of the cell,
wherein the suspended particles are aligned in one direction, when electricity is supplied to the cell through the conductive material.

3. The electronic device of claim 2, wherein the sheet is a suspended particle display (SPD) sheet.

4. The electronic device of claim 1, further comprising a cover covering an opening formed on a rear
surface of the housing,
wherein a degree of transparency of the cover is variable.

5. The electronic device of claim 4, wherein the cover comprises:
a first cover covering a portion of the opening formed in the rear surface of the housing; and
a second cover covering a remaining portion of the opening,
wherein a degree of transparency of the first cover and a degree of transparency of the second cover are independent of each other.

6. The electronic device of claim 1, wherein the amplifier comprises a plurality of amplifiers spaced apart
from each other,
wherein each of the plurality of amplifiers is a vacuum tube amplifier, and has a light source whose brightness is adjustable.

7. The electronic device of claim 1, further comprising:
a fixed body mounted inside the housing, wherein the fixed body has a spiral guide slot formed on a lateral surface of the fixed body;
a rotating body rotatable inside the fixed body, wherein the rotating body has a linear guide hole formed on a lateral surface of the rotating body;
a motor rotating the rotating body; and
a pin penetrating the guide slot and the guide hole,
wherein the speaker is coupled to a distal end of the pin, and able to linearly move in a longitudinal direction of the guide hole while rotating in a rotation direction of the rotating body.

8. The electronic device of claim 7, further comprising a head covering the speaker,
wherein the housing comprises a hole which is formed on one side of the housing, and through which the head passes.

9. The electronic device of claim 8, wherein the hole comprises a pair of holes spaced apart from each
other along the one side of the housing,
wherein the head comprises a pair of heads positioned in the pair of holes,
wherein the speaker comprises a pair of speakers coupled to the pair of heads.

10. The electronic device of claim 7, further comprising:
a supporter which is positioned in the internal space of the housing, and extends in a linear movement direction of the speaker; and
a speaker assembly which has the fixed body, the rotating body, the pin, the motor, and the speaker, and which is mounted inside the supporter.

11. The electronic device of claim 7, further comprising a head which is opposite to the rotating body with
respect to the speaker, and to which the speaker is coupled,
wherein the distal end of the pin is coupled to the head.

12. The electronic device of claim 7, further comprising a moving body which is positioned between the
speaker and the rotating body, and to which the speaker is coupled,
wherein the distal end of the pin is coupled to the moving body.

13. The electronic device of claim 7, wherein the fixed body has a cylindrical shape that is open upward,
wherein the rotating body has a cylindrical shape that is open upward inside the fixed body,
wherein the guide slot comprises a pair of guide slots spaced apart from each other in a circumferential direction of the fixed body,
wherein the guide hole comprises a pair of guide holes which extend in a vertical direction, and which are spaced apart from each other in a circumferential direction of the rotating body,
wherein the pin comprises a pair of pins which penetrate the pair of guide slots and the pair of guide holes.

14. The electronic device of claim 1, wherein the housing comprises:
a first housing which provides an internal space in which the amplifier is positioned, and to which the display panel and the sheet are coupled; and
a second housing coupled to the first housing,
wherein the speaker is coupled to the second housing, and provides sound in a forward direction of the second housing.

15. The electronic device of claim 1, wherein the sheet becomes opaque when the display panel outputs an image, and becomes transparent when the display panel does not output an image.
